# EUROPEAN PATENT SPECIFICATION

(11) **EP 3 902 641 B1**
(45) Date of publication and mention of the grant of the patent: **07.05.2025**
(21) Application number: 19835236.1
(22) Date of filing: 24.12.2019
(51) Int. Cl.: B21D 28/22, B21D 35/00, B21D 39/03, H02K 15/02

(54) **PROCESS FOR MANUFACTURING A LAMINATE OF STACKED METAL PARTS INCLUDING A MULTI-LAYER BLANKING PROCESS STEP**
VERFAHREN ZUR HERSTELLUNG EINES LAMINATS AUS GESTAPELTEN METALLTEILEN MIT EINEM SCHRITT MIT MEHRSCHICHTSTANZPROZESS
PROCÉDÉ DE FABRICATION D'UN STRATIFIÉ DE PIÈCES MÉTALLIQUES EMPILÉES COMPRENANT UNE ÉTAPE DE TRAITEMENT DE DÉCOUPAGE MULTICOUCHE

(30) Priority: 24.12.2018 NL 1043110
(43) Date of publication of application: 03.11.2021
(73) Proprietor: Robert Bosch GmbH, 70442 Stuttgart (DE)
(72) Inventor: BRANDSMA, Arjen, 5045 WN Tilburg (NL); JANSSEN, Theodorus, Martinus, Henricus, 5642 RP Eindhoven (NL)
(74) Representative: Plevier, Gabriël Anton Johan Maria
(86) International application number: PCT/EP2019/025485
(87) International publication number: WO 2020/135927

(56) References cited:
- EP-A1- 3 238 847
- WO-A1-2017/174215
- JP-A- 2005 261 038
- US-A1- 2017 040 850
- US-B2- 10 109 417

## Description

The present disclosure relates to a process for manufacturing a laminate of metal parts including a multi-layer blanking process step, in particular a multi-layer fine blanking process that is known from the publication of the international patent application WO2017/174215.

The blanking process is, as such, generally known and are broadly applied in the manufacturing of metal parts, in particular for the cutting-out thereof from strip or plate shaped basic material. In the known blanking process at least the 2D contour of the metal part is shaped by pressing a correspondingly shaped blanking punch against and through the basic material, which basic material is clamped between a blanking die and a blank holder of a blanking device. The blanking die and the blank holder thereto define a respective cavity that is shaped to accommodate the blanking punch. An edge of the blanking die defining the contour of the cavity thereof, carves into and finally completely cuts through the basic material, as such basic material is progressively pressed into the cavity by the movement of the blanking punch relative to the blanking die. Within this context, the fine blanking process is set apart from the more conventional blanking process, by the presence of the counter punch located opposite the blanking punch and pressing against the other side of the basic material as the blanking punch.

In order to increase a production rate of the former, known blanking and fine blanking processes, it has been proposed in the art to apply a layered basic material therein, i.e. to stack two or more layers of the basic material on top of one another prior to the actual blanking, i.e. cutting thereof. In this case, a number of metal parts can be formed with a single blanking punch in a single blanking stroke that corresponds to the number of layers of the layered basic material. The known multi-layer blanking process is particularly relevant for the production of metal parts of relatively small thickness, such as individual lamina for an electric motor stator or rotor laminate, by using basic material of such small thickness. In particular by applying such layered basic material, a production rate of the blanking process can be increased, essentially proportional to the number of layers that are applied in the layered basic material. The multi-layer fine blanking process variant of the multi-layer blanking has been proposed recently for handling even thinner metal parts, i.e. for handling even thinner layers of the basic material than what is possible with the conventional blanking process.

US10109417 and EP-A-3238847, on which the preamble of claim 1 is based, provide further examples of a multi-layer blanking process, in particular of the said conventional variant thereof that does not include the counter punch of fine-blanking. According to these documents, a stack of two layers, i.e. of two metal strips is fed to the blanking device and two mutually insulated rotor parts are subsequently blanked simultaneously from such layered basic material by the blanking punch. Further according to these documents, an interlock is created between the individual layers of the layered basic material in all of the length, width and height or thickness direction thereof, which interlock is created by plastic deformation in a section thereof that corresponds to the metal parts to be blanked. Such interlock is thus created before the said section of the layered basic material with that interlock is advanced to between the blanking die and the blank holder or between the blanking punch and counter punch of the fine blanking device. This has the advantage that not only the layered basic material is favourably held together as an integral part when it is advanced in, i.e. relative to the blanking device, but also the metal parts are held together in this way after blanking, i.e. after these have been cut out of the layered basic material by the blanking device.

It is noted that such interlocking method by plastic deformation is generally known per se for the interlocking in all three dimensions of two sheet metal layers and is referred to as press-locking hereinafter. In the art, such press-locking method and/or variants thereof are also referred to as clinching. The known press-locking method requires a press-locking punch and an anvil that are located on opposite sides of the layered basic material and that are pressed together to plastically deform the layered basic material there between into an keyed connection that is referred to herein as the interlock. It is further noted that press-locking of more than two sheet metal layers is not practiced, because of the excessive (plastic) deformation that would be necessary in the known applications thereof.

In fact, US10109417 concerns and is limited to a specific type of interlock, i.e. a specific press-locking method. Namely, in US10109417 a rectangular section of the two layered stack of basic material is pushed below the two layers thereof, by bending the short sides of such rectangular section, whilst shearing-off its long sides. Hereby, a rectangular cavity is formed in the two layers of the basic material, whilst a rectangular bulge is formed below these. Because the bulge is compressed between the press-locking punch and the anvil, it is expanded sideways, i.e. in a direction that is parallel to the short sides of the said rectangular section. As a result, the long sides of the bulge catch, i.e. hook on the long sides of the cavity, such that the layers of the layered basic material cannot be separated in the height or thickness direction thereof.

Further, according to US10109417, after a set of two metal parts containing such interlock are simultaneously blanked from the layered basic material, a laminate is assembled from several of such sets of blanked metal parts by pressing the bulge of the interlock of a first set of blanked metal parts in the cavity of the interlock of an adjacent set of blanked metal parts in the laminate. Hereby, the said bulge is elastically compressed to fit into the said cavity that is elastically stretched, such that an interference or press fit is created between such neighbouring sets of blanked metal parts. Of course, as a consequence of creating the press fit, the keyed connection between the individual layers, i.e. between the metal parts of a set is lost.

According to the present disclosure, the above known process for manufacturing the laminate can be improved upon. The present invention provides such an improved process with a method according to the features of independent claim 1.

In the laminate manufacturing process according to the invention, the layered basic material is not only provided with the interlock, but also with a hole that is therein as part of the multi-layer blanking process step. This hole serves to receive the bulge of the interlock of the said adjacent set of blanked metal parts in the laminate. Hereby, the bulge of the interlock is not compressed in the laminate, or at least to a lesser extent than what is taught by US10109417, and favourably remains hooked on the (long) side of the cavity of that same interlock. Moreover, the method according to the invention favourably allows for other known types of interlock than the rectangular interlock to be applied. Further, press-locking was surprisingly found to be suitable also for joining and interlocking more than two layers of sheet metal, provided that these layers have a combined thickness in the range from 0.2 to 1.2 mm and that their individual thickness lies in the range from 0.1 to 0.3 mm, preferably does not exceed 0.2 mm.

In the following, the laminate manufacturing process according to the present invention is explained further by way of example embodiments and with reference to drawing figures, whereof:
Figure 1 is a schematic, plan view of a typical blanked metal part, being a single lamina made from electrical steel for a stack of lamina, i.e. laminate, for a rotor of an electric motor;
Figures 2A to 2F schematically illustrate a multi-layer blanking device and process for forming metal parts;
Figure 3 is a perspective view of a schematically drawn cross-section of a layered basic material used in the multi-layer blanking process, which layered basic material is provided with an interlock between the individual layers thereof;
Figures 4A and 4B schematically illustrate a simplified press-locking device and process for forming the interlocking illustrated in figure 3;
Figure 5 is a schematic representation of a known multi-layer blanking process including a process step of press-locking;
Figure 6 is a schematic representation of a novel multi-layer blanking process according to a preferred embodiment of the invention;
Figure 7 schematically illustrates two sets of mutually interlocked blanked metal parts both in a plan view and in a side elevation thereof;
Figure 8 schematically illustrates a first mutual arrangement of the two stack types of figure 7 in the laminate;
Figure 9 schematically illustrates a second mutual arrangement of the two stack types of figure 7 in the laminate;
Figure 10 schematically illustrates an interference fit between the interlock of a stack of blanked metal part and a hole in another, neighbouring stack of blanked metal part in the laminate; and
Figure 11 a schematically drawn cross-sectional view of an alternative embodiment of the interlock between the individual layers of the layered basic material.

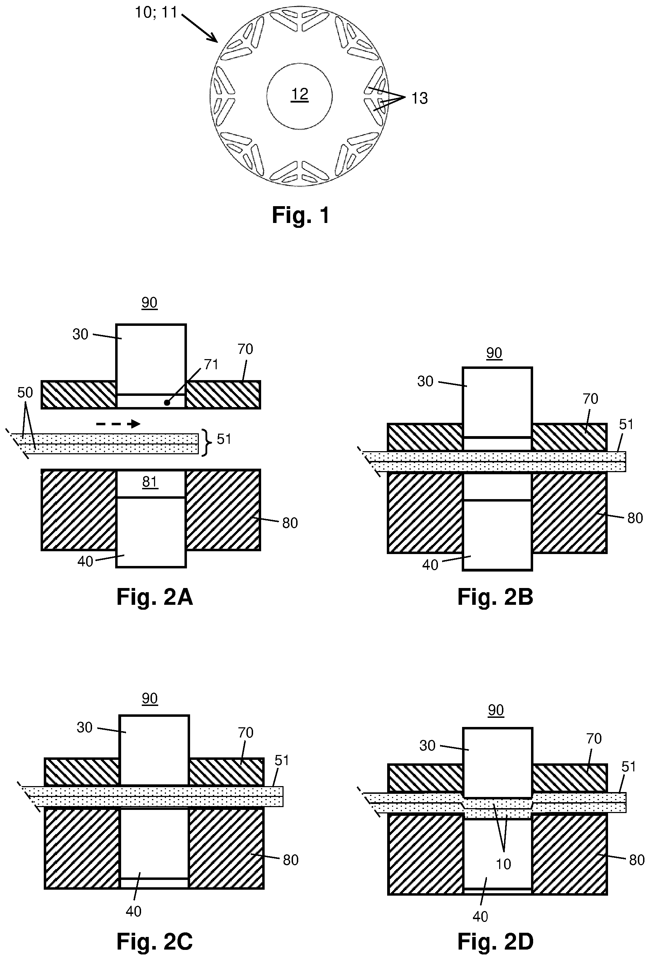

Figure 1 provides an example of a metal part 10 that can suitably be produced with the aid of a blanking process, in particular the multi-layer blanking process discussed herein. In this example the metal part 10 takes the form of an individual rotor disc 11 for a rotor laminate, i.e. stack of rotor discs of an electric motor. In this particular example, the rotor disc 11 is provided with a primary or central hole 12 and a number of secondary holes 13 that are arranged along its circumference. The outer contour, i.e. perimeter of the rotor disc 11 as well as the contours of the central and secondary holes 12, 13 thereof are formed, i.e. are cut out of a basic material, in particular electrical steel, either simultaneously in one cut, i.e. with a single stroke of a blanking device 90, or in a number of subsequent partial cuts in separate stages of the blanking process. In the electric motor, the central holes 12 of (the stack of) the rotor discs 11 accommodate a rotor shaft and the said secondary holes 13 thereof accommodate magnets. Often an electrically isolating layer is provided between the individual rotor discs 11 in the rotor stack in order to reduce so-called Eddy current losses, possibly in the form of an electrically isolating coating applied to at least one side of the basic material for the rotor discs 11 before blanking.

Inter alia, it is noted that the exact size or the exact contour of the rotor disc 11 illustrated in figure 1 is not relevant within the context of the present disclosure. Rather, the present disclosure is also applicable to not only differently shaped rotor discs 11, but also the stator ring component (not illustrated) of the stator laminate of the electric motor and even to metal parts 10 in general, as long as these parts 11 are at least partly formed in the multi-layer fine blanking process that is described hereunder.

The figures 2A-2F schematically illustrate a multi-layer blanking process for producing the rotor discs 11 or the metal part 10 in general. The figures 2A-2F each represent a simplified cross-section of the blanking device 90 that is used to cut-out such metal parts 10 from a layered basic material 51 comprising two or more (here: two) of mutually stacked layers, i.e. strips 50 of basic material. The blanking device 90 includes a blanking punch 30, a counter punch 40, a blank holder 70 and a blanking die 80. The blank holder 70 and the blanking die 80 each define a respective cavity 71, resp. 81, wherein the blanking punch 30 and the counter punch 40 are contained, which cavities 71, 81 are shaped to correspond to the (contour of the) metal part 10. This particular type of blanking process/blanking device 90 using a counter punch 40 is known per se, namely as a fine-blanking.

In figure 2A, the blanking device 90 is shown in a first open state, wherein the blanking punch 30 is fully retracted into the blank holder 70, the counter punch 40 is fully retracted into the blanking die 80 and wherein the blank holder 70 and the blanking die 80 are separated from one another, at least sufficiently for allowing the layered basic material 51 to be inserted and/or advanced along its length direction relative to the blanking device 90, as schematically indicated by the dashed arrow.

In figure 2B the blanking device 90 is shown after the blank holder 70 and the blanking die 80 have been moved towards each other to clamp the layered basic material 51 between them.

In figure 2C the blanking device 90 is shown after the blanking punch 30 and the counter punch 40 have been moved towards each other to also clamp the layered basic material 51 between them.

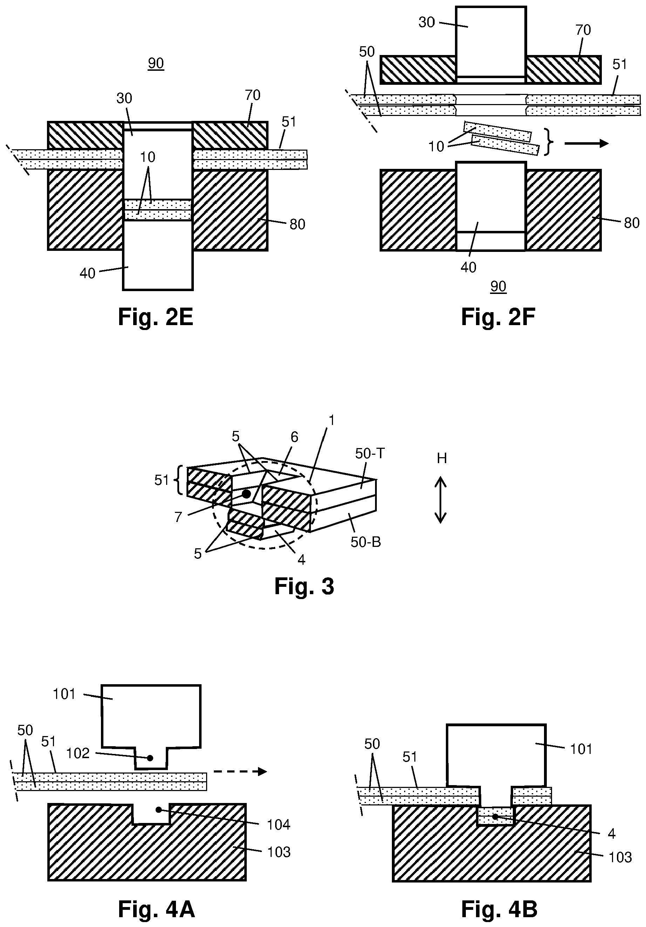

In figures 2D and 2E the step of cutting out the metal part 10 from each strip 50 of the layered basic material 51, by the forced movement of the combination of the blanking punch 30 and the counter punch 40 relative to the blanking die 80, is illustrated. In particular in figure 2D the blanking device 90 is shown during such cutting-out and in figure 2E the blanking device 90 is shown after the metal parts 10 have been completely cut out, i.e. have been severed from the layered basic material 51, but are still held between the blanking punch 30 and the counter punch 40.

In figure 2F the blanking device 90 is shown in a second open state, wherein the blanking punch 30 is fully retracted into the blank holder 70 and wherein the counter punch 40 protrudes from the blanking die 80 after pushing the blanked metal parts 10 upwards out of the cavity 81 of the blanking die 80 to allow the extraction thereof from the blanking device 90. After such extraction, the blanking device 90 returns to its first open state shown in figure 2A etc. 3

As illustrated in figure 2F, the blanked metal parts 10 are extracted individually, or at least as individual, i.e. loose parts in the second open state of the blanking device 90.

In order to be able to extract the blanked metal parts 10 from the blanking device as a whole, it is known to interlock these in all of the length, width and thickness directions thereof (i.e. in all 3 spatial/physical dimensions) by the local plastic deformation of the strips 50 of the layered basic material 51 within the contour of the metal parts 10 to be blanked. In particular such an interlock 1 is created by so-called press-locking, before the layered basic material 51 is inserted between the blanking punch 30 and the counter punch 40 of the blanking device 90.

A possible embodiment of such interlock 1 is schematically illustrated in figure 3 in an enlarged cross-section of the layered basic material 51. In this example of the interlock 1, it is essentially shaped predominantly rectangular. In particular a rectangular bulge 4 is formed on the layered basic material 51 by bending down the two short sides 6 of the rectangle and shearing-off its two long sides 5, whilst leaving a rectangular cavity 7 in the plane of the layered basic material 51. In this realization of the interlock 1, the relative movement in thickness direction of the individual layers of the basic material 51, i.e. strips 50; 50-T, 50-B is blocked by the sheared long sides 5 of the bulge 4 at a top layer 50-T of the layered basic material 51 catching the sheared long sides 5 of a bottom layer 50-B of the layered basic material 51 and thus forming a keyed connection there between. In the practical realization of this particular embodiment of the interlock 1, the width of the bulge 4 between the said long sides 5 typically exceeds such width of the cavity by at least 2%.

In figure 4A and 4B, an example of a press-locking method, in particular the press-locking method for forming the interlock 1 of figure 3 is schematically illustrated. In a first step of this particular press-locking method -that is illustrated in figure 4A- the layered basic material 51 is inserted between a press-locking punch 101 with a projection 102 and an anvil 103 defining a hollow 104. In a second step of the press-locking method -that is illustrated in figure 4B- the projection 102 of the press-locking punch 101 is pressed into the layered basic material 51 -whereby the rectangular cavity 7 is formed therein (see figure 3)- and the basic material 51 is displaced downward into the hollow 104 in the anvil 103 - whereby a protruding bulge 4 is formed thereon (see figure 3). Because the depth of the hollow 104 is somewhat less than the thickness of the layered basic material 51, the said bulge 4 is expanded sideways, somewhat beyond and thus catches the (long) sides 5 of the cavity 7.

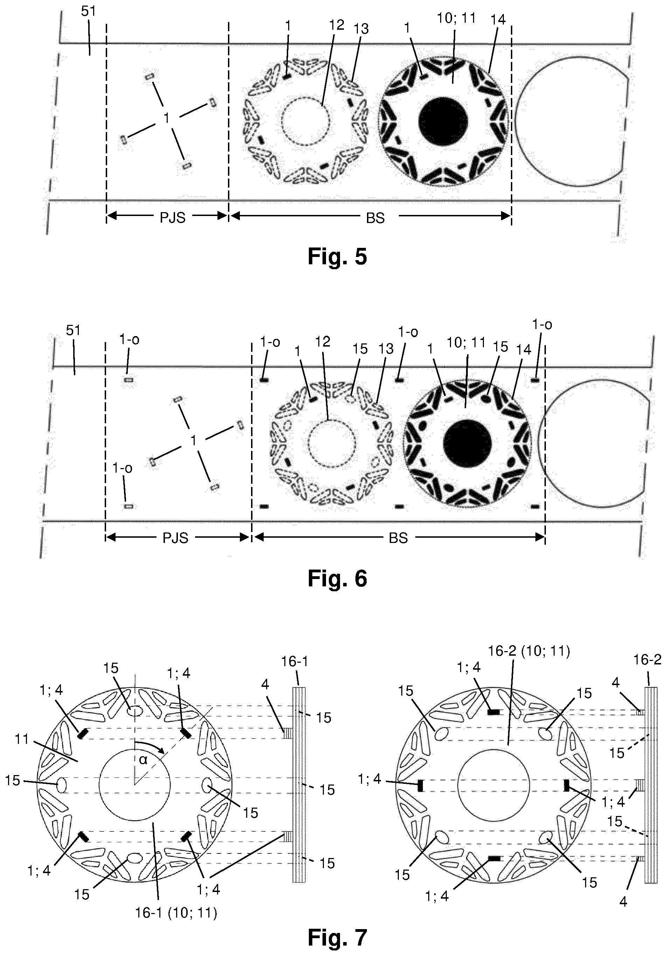

In figure 5 the known multi-layer blanking process including the process step of press-locking is schematically illustrated in a plan view of the layered basic material 51, i.e. looking downward in the height direction H thereof. Firstly, in a press-joining stage PJS of the known multi-layer blanking process, multiple (here: four) interlocks 1 are formed within the contour of the metal parts 10 to be blanked. Once formed, the interlocks 1 are transported together with the layered basic material 51, by the said intermitted advancement thereof, to the blanking stage BS. In the blanking stage BS, the metal parts 10 (that are depicted as rotor discs 11 in figure 5) are cut out of the layered basic material 51 in two subsequent partial cuts. In the first partial cut the central hole 12 and the secondary holes 13 are cut and in the second partial cut the outer circumference 14 of the metal part 10 is cut thus finally separating the metal parts 10 from the layered basic material 51. By providing the interlocks 1 within the contour of the metal parts 10, these are favourably held together after being cut out of the layered basic material 51 in the blanking stage BS. In this way, a stacked set of a number of blanked metal parts 10 is created, which number of parts 10 corresponds to the number of individual layers 50 of the layered basic material 51. Moreover, the known interlocks 1 promote the synchronising and the mutual alignment of the individual strips 50 of the layered basic material 51 when it is (intermittedly) advanced as part of the multi-layer blanking process.

Typically, e.g. in case of the electric motor, the end product laminate contains fare more layers (e.g. several hundred layers) than the two layers 50 that are included in the said set of blanked metal parts 10, or at more than that can conceivably be cut simultaneously with the multi-layer blanking process. Thus, in practice, a large number of such sets are placed on top of one another in a subsequent process step to form the laminate, whereto the bulge 4 of the interlock 1 of a first set of blanked metal parts 10 is pressed into the cavity 7 of the interlock 1 of an adjacent, second set of blanked metal parts 10. Hereby, an interference fit is created between these first and second sets of blanked metal parts 10, however at the expense of the positive, i.e. keyed connection between the blanked metal parts 10 within each such set.

According to the present invention, this latter disadvantage of the known multi-layer blanking process can be overcome by the novel multi-layer blanking process that is schematically illustrated in figure 6 in a plan view of the layered basic material 51 corresponding to that of figure 5, however, composed of four layers 50 of the basic material 51 stacked on top of one another. According to the present invention, the metal parts 10 are provided with tertiary holes 15 in the blanking stage BS. In particular, one such tertiary hole 15 is cut for each interlock 1 that has been created within the circumference 14 of the metal part 10 in the preceding press-joining stage PJS. Each such tertiary hole 15 is shaped and sized to be able to receive the bulge 4 of a respective interlock 1, whereas the number of such tertiary holes 15 is at least equal to the number of interlocks 1.

It is an optional feature to also provide one or more interlocks 1-o outside the contour of the metal parts 10 to be blanked, as illustrated in figure 6 as well. By this latter feature, the synchronising and the mutual alignment of the individual strips 50 of the layered basic material 51 is favourably enhanced further, e.g. also after the set 16 of metal parts 10 has been separated therefrom in the blanking process step.

In figure 7 two stacked sets 16; 16-1, 16-2 of blanked metal parts 10 obtainable with the novel multi-layer blanking process of figure 6 are schematically illustrated, both in a plan view and in a side elevation. In the side elevations, the tertiary holes 16 are indicated by a pair of dashed lines each, whereas the central hole 12, the secondary holes 13 and the cavity 7 of the interlocks 1 are not indicated therein for clarity.

In accordance with the present invention, the bulges 4 of the interlocks 1 of the first set 16-1 of blanked metal parts 10 are aligned with the tertiary holes 15 of the second set 16-2 of metal parts 10 before these are placed on top of one another to (at least partly) form the laminate. Hereby, the bulges 4 of the interlocks 1 of the said first set 16-1 are inserted in the tertiary holes 15 of the said second set 16-2 neighbouring it, favourably without exerting a substantial compressive force on the interlock 1, in particular on the said bulge 4 thereof.

Preferably, the blanked metal parts 10 of each set 16-1, 16-2 are identically shaped, such that these can be manufactured cost-effectively with only one blanking device 90. In this case, the interlocks 1 and tertiary holes 15 are arranged in a regular geometric pattern, for example equally spaced on the circumference of a virtual circle. The embodiment of the rotor disc 11 that is illustrated in figure 7 satisfies such preference, since a first set 16-1 of metal parts 10 is identical to a second set 16-2 of metal parts 10 after it has been rotated over an angle α of 45 degrees clockwise (or a positive or negative odd multiple thereof).

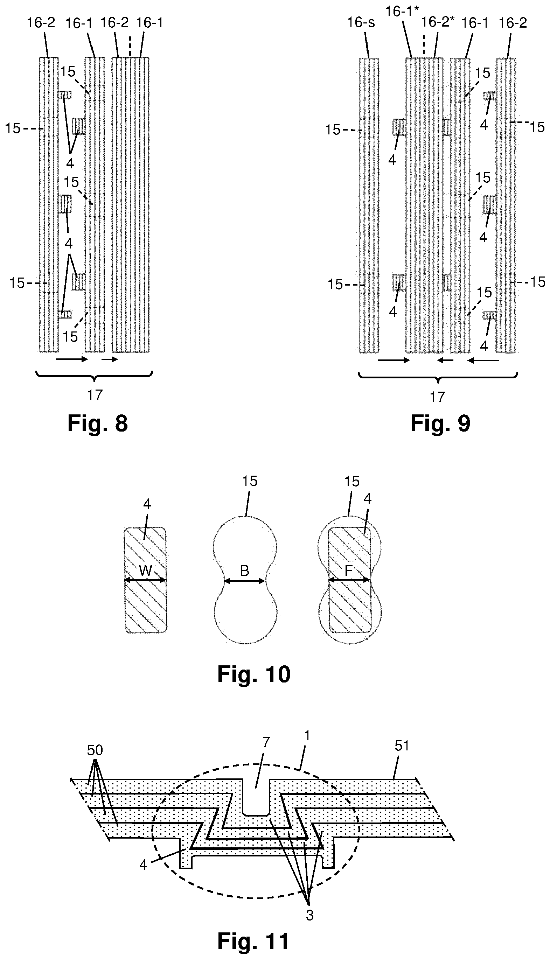

In addition to being rotated relative to the said second set 16-2, the said first set 16-1 can also be flipped upside down before being placed against the said first set 16-1 to (at least partly) form a laminate 17. Hereby, not only the bulges 4 of the interlocks 1 of the said first set 16-1 are inserted and/or received in the tertiary holes 15 of the said neighbouring, second set 14-2, but also vice versa. In principle every other set 16-2 in the laminate 17 can be flipped in this way, which particular mutual arrangement of the two types 16-1, 16-2 of sets 16 of metal parts 10 is schematically illustrated in figure 8. Alternatively, the laminate 17 (or a section thereof) can be started (or finished) with a starting set 16-s of metal parts 10 that is not provided with the interlocks 1, such that no bulges 4 protrude to the outside of the laminate 17, while a relative rotation between favourably all sets 16; 16-1, 16-2, 16-s thereof is still limited to a clearance between the bulges 4 and the tertiary holes 15 that can be small. This particular arrangement of the laminate 17 is schematically illustrated in figure 9. However, for the same purpose of realising that the bulges 4 do not protrude to the outside of the laminate 17, it is also possible to either:
- flip the said starting set 16-s of the laminate 17 upside-down relative to the other sets 16; 16-1, 16-2 thereof, while providing the set 16-1* that is adjacent to this starting set 16-s with a number of tertiary holes 15 that is equal to the sum of the number of interlocks 1 and/or bulges 4 of both the starting set 16-s and its other neighbouring set 16-2*, or
- flip the said starting set 16-s of the laminate 17 upside-down relative to the other sets 16; 16-1, 16-2 thereof, while forming the interlocks 1 of all sets 16; 16-1, 16-2, 16-s with bulges 4 that over no more than half a height of the layered basic material 51, i.e. less than half the combined thickness of the individual strips 50 thereof.
Either one of these latter two arrangements favourably avoids an interference between the bulges 4 of the said starting set 16-s and those of the said other neighbouring stack 16-2*.

As mentioned above, the surface area of the tertiary hole 15 should be large enough to receive the bulge 4 of the interlock 1 that is to be inserted therein. A mutual bonding and/or fixation of the sets 16 of metal parts 10 relative to one another in the laminate 17 can in this case be realised by gluing or welding, or, at least in case of the rotor discs 11, by inserting the rotor shaft through the central holes 12 of the metal parts 10. Ideally, however, the bulges 4 are received in the tertiary holes 15 with an interference fit, such that not only the relative rotation between all sets 16; 16-1, 16-2, 16-s of metal parts 10 in the laminate 17 is favourably prevented, but also their relative displacement in the height direction of the laminate 17, i.e. in a stacking direction. Such interference fit F can, for example, be realised by at least locally providing the tertiary hole 15 with a breadth B that is somewhat smaller than a local width W of the bulge 4, as is schematically illustrated in figure 10. Quantitatively speaking, such local width W of the bulge 4 preferably exceeds the local breadth B of the hole 15 by 0.1 to 1.0%, more preferably by 0.3 to 0.6%. Hereby, a tearing of the hole 15 is prevented, even for the presently considered relatively thin layers 51 of the layered basic material 50.

It is noted that the exact realization of the press-locking method is not relevant within the context of the present disclosure. Rather, the present disclosure relates to any press-locking method that realises a mutual interlocking of the individual layers/strips 50 of the layered basic material 51 in all three dimensions by the targeted, i.e. local and controlled plastic deformation thereof. In this respect, figure 11 schematically illustrates a possible alternative embodiment of the interlock 1 in an enlarged cross-section of the layered basic material 51. In this example of the interlock 1 is realised by an essentially dovetail-shaped joint 3 that is circularly symmetric, such that it prevents the strips 50 from relative movement in all three dimensions. In this latter embodiment of the interlock 1, its cavity 7 is provided with a relatively small dimension in the plane of the layered basic material 51 relative to such dimension of its bulge 4. Also in this latter embodiment of the interlock 1, its cavity 7 extends over only a part of the height of the layered basic material 51.

Preferably, the above-described press-locking methods are carried out as part of, i.e. as a process stage in the multi-layer blanking process. In this case, the first press-locking step (figure 4A) is synchronized with the first multi-layer blanking step (figure 2A), whereas the second press-locking step (figure 4B) is preferably synchronized with the cutting of the metal parts 10 out of the layered basic material 51 (figure 2D). More specifically, the movement of the press-locking punch 101 relative to the anvil 103, can be favourably coordinated with the movement of the blank holder 70 or of the blanking punch 30 relative to the blanking die 80, i.e. with the opening and closing of the blanking device 90. Preferably, these relative movements are not only mutually coordinated but also jointly actuated. In other words, pressing joining can be advantageously integrated in the multi-layer blanking process.

## Claims

1. A method for manufacturing a laminate (17) of mutually stacked metal parts (10; 11) by means of a multi-layer blanking process, wherein in the multi-layer blanking process successively several layered sets (16; 16-1, 16-2, 16-s) of such metal parts (10; 11) are cut from a layered basic material (51), in which subsequently the laminate (17) is assembled from several such sets (16; 16-1, 16-2, 16-s) of the metal parts (10; 11), by stacking these, and in which, prior to the multi-layer blanking process, the individual layers (50) of the layered basic material (51) are interconnected by plastically deforming them, whereby a bulge (4) is formed on the layered basic material (51) within the outer circumference (14) of the, still to be cut, metal parts (10; 11), **characterized in that** the metal parts (10; 11) are provided with a hole (15) that is cut in the multi-layer blanking process and that extends completely through the layered basic material (51) and **in that** when the laminate (17) is assembled, the bulge (4) of a first set (16; 16-1) of the metal parts (10; 11) is inserted into the hole (15) of a second set (16; 16-2) of the metal parts (10; 11).

2. The method for manufacturing the laminate (17) according to claim 1, **characterized in that** prior to the multi-layer banking process a substantially rectangular cavity (7) is pressed into the layered basic material (51), while the bulge (4) is formed with a likewise substantially rectangular shape whereof the short sides (6) are bent with respect to the surrounding layered basic material (51) and whereof the long sides (5) are cut loose from the surrounding layered basic material (51) and **in that** the cut long sides (5) of the bulge (4) extend beyond the cut long sides (5) of the cavity (7).

3. The method for manufacturing the laminate (17) according to claim 1, **characterized in that** prior to the multi-layer banking process a substantially rectangular cavity (7) is pressed into the layered basic material (51) with a dimension in the plane of the layered basic material (51) that is smaller than a dimension of the bulge (4) that is formed on the layered basic material (51) opposite to the cavity (7) in the same plane.

4. The method for manufacturing the laminate (17) according to claim 3, **characterized in that** a dimension of the bulge (4) perpendicular to the layered basic material (51) is equal to or smaller than half a dimension i.e. thickness, of the layered basic material (51) in the same direction and preferably is equal to or greater than 0.2 mm.

5. The method for manufacturing the laminate (17) according to a preceding claim, **characterized in that** a force fit is realized in the laminate (17) between the said bulge (4) and the said hole (15).

6. The method for manufacturing the laminate (17) according to claim 5, **characterized in that** a dimension (W) of the bulge (4) outside the hole (15) is larger, preferably is between 0.1 and 1.0% larger than a corresponding dimension (B) of the hole (15) without the bulge (4) inserted therein.

7. The method for manufacturing the laminate (17) according to a preceding claim, **characterized in that** the said bulge (4) is formed on the layered basic material (51) at a plurality of positions within the contour of the metal parts (10; 11) and **in that** the metal parts (10; 11) are provided with a number of the said holes (15) that is at least equal to the number of the said bulges (4).

8. The method for manufacturing the laminate (17) according to claim 7, **characterized in that** the bulges (4) and the holes (15) formed therein are situated on the circumference of an imaginary circle and, thereby, preferably show a rotational symmetry.

9. The method for manufacturing the laminate (17) according to a preceding claim, **characterized in that** prior to the multi-layer blanking process the individual layers (50) of the layered basic material (51) are interconnected also outside the contour (14) of the, still to be cut, metal parts (10; 11).

10. The method for manufacturing the laminate (17) according to a preceding claim, **characterized in that** the layers (50) of the layered basic material (51) have a mutually at least substantially the same thickness, have a mutually at least substantially the same material composition or both.

11. The method for manufacturing the laminate (17) according to a preceding claim, **characterized in that** the layered basic material (51) comprises at least 2 layers (50) and at most 12 layers (50) with a layer thickness of at least at least 0.1 mm and at most 0.3 mm and has a total thickness of at most 1.2 mm.

12. The method for manufacturing the laminate (17) according to a preceding claim, **characterized in that**, when assembling the laminate (17), the bulge (4) of the said second set (16; 16-2) of the metal parts (10; 11) is inserted into the hole (15) of the said first set (16; 16-1) of the metal parts (10; 11).

13. The method for manufacturing the laminate (17) according to a preceding claim, **characterized in that**, in assembling the laminate (17), a start set (16-s) is applied that is not provided with the said bulges (4).

14. The method for manufacturing the laminate (17) according to a preceding claim, **characterized in that** a height of the said bulges (4) relative to the adjacent layered basic material (51) is less than half of the thickness of the layered basic material (51) and **in that**, in assembling the laminate (17), a start set (16-s) is applied that is turned upside down relative to the other sets (16; 16-1, 16-2) of the laminate (17).

15. The method for manufacturing the laminate (17) according to a preceding claim, **characterized in that**, in assembling the laminate (17), a start set (16-s) is applied that is turned upside down relative to the other sets (16; 16-1, 16-2) of the laminate (17) and **in that** the metal parts (10; 11) of an adjacent set (16-1*) in the laminate (17) is provided with a number of holes (15) in the multi-layer blanking process that is equal to the sum of the number of bulges (4) of the start-set (16-s) and of the other adjacent set (16-2 *) thereof.

## Patentansprüche

1. Ein Verfahren zur Herstellung eines Laminats (17) aus übereinander gestapelten Metallteilen (10; 11) mittels eines Mehrlagen-Stanzprozesses, wobei im Mehrlagen-Stanzprozess nacheinander mehrere geschichtete Sätze (16; 16-1, 16-2, 16-s) solcher Metallteile (10; 11) aus einem geschichteten Grundmaterial (51) ausgeschnitten werden, aus dem anschließend das Laminat (17) aus mehreren solchen Sätzen (16; 16-1, 16-2, 16-s) der Metallteile (10; 11) durch Stapeln dieser zusammengesetzt wird, und wobei vor dem Mehrlagen-Stanzprozess die einzelnen Schichten (50) des geschichteten Grundmaterials (51) durch plastisches Verformen miteinander verbunden werden, wodurch eine Wölbung (4) auf dem geschichteten Grundmaterial (51) innerhalb des äußeren Umfangs (14) der noch auszuschneidenden Metallteile (10; 11) entsteht, **dadurch gekennzeichnet, dass** die Metallteile (10; 11) mit einem Loch (15) versehen sind, das im Mehrlagen-Stanzprozess ausgeschnitten wird und das vollständig durch das geschichtete Grundmaterial (51) hindurchgeht, und dass beim Zusammenbauen des Laminats (17) die Wölbung (4) eines ersten Satzes (16; 16-1) der Metallteile (10; 11) in das Loch (15) eines zweiten Satzes (16; 16-2) der Metallteile (10; 11) eingesetzt wird.

2. Das Verfahren zur Herstellung des Laminats (17) gemäß Anspruch 1, **dadurch gekennzeichnet, dass** vor dem Mehrlagen-Stanzprozess eine im Wesentlichen rechteckige Vertiefung (7) in das geschichtete Grundmaterial (51) eingepresst wird, während die Wölbung (4) mit einer ebenfalls im Wesentlichen rechteckigen Form gebildet wird, deren kurze Seiten (6) im Verhältnis zum umgebenden geschichteten Grundmaterial (51) gebogen sind und deren lange Seiten (5) vom umgebenden geschichteten Grundmaterial (51) abgetrennt sind, und dass die abgetrennten langen Seiten (5) der Wölbung (4) über die abgetrennten langen Seiten (5) der Vertiefung (7) hinausragen.

3. Das Verfahren zur Herstellung des Laminats (17) gemäß Anspruch 1, **dadurch gekennzeichnet, dass** vor dem Mehrlagen-Stanzprozess eine im Wesentlichen rechteckige Vertiefung (7) in das geschichtete Grundmaterial (51) mit einer Dimension in der Ebene des geschichteten Grundmaterials (51) eingepresst wird, die kleiner ist als eine Dimension der Wölbung (4), die auf dem geschichteten Grundmaterial (51) gegenüber der Vertiefung (7) in derselben Ebene gebildet wird.

4. Das Verfahren zur Herstellung des Laminats (17) gemäß Anspruch 3, **dadurch gekennzeichnet, dass** eine Dimension der Wölbung (4) senkrecht zum geschichteten Grundmaterial (51) gleich oder kleiner als die Hälfte einer Dimension, d.h. Dicke, des geschichteten Grundmaterials (51) in derselben Richtung ist und vorzugsweise gleich oder größer als 0,2 mm ist.

5. Das Verfahren zur Herstellung des Laminats (17) gemäß einem vorhergehenden Anspruch, **dadurch gekennzeichnet, dass** eine formschlüssige Verbindung im Laminat (17) zwischen der genannten Wölbung (4) und dem genannten Loch (15) realisiert wird.

6. Das Verfahren zur Herstellung des Laminats (17) gemäß Anspruch 5, **dadurch gekennzeichnet, dass** eine Dimension (W) der Wölbung (4) außerhalb des Lochs (15) größer ist, vorzugsweise zwischen 0,1 und 1,0 % größer als eine entsprechende Dimension (B) des Lochs (15) ohne die darin eingesetzte Wölbung (4).

7. Das Verfahren zur Herstellung des Laminats (17) gemäß einem vorhergehenden Anspruch, **dadurch gekennzeichnet, dass** die genannte Wölbung (4) auf dem geschichteten Grundmaterial (51) an mehreren Positionen innerhalb der Kontur der Metallteile (10; 11) gebildet wird und dass die Metallteile (10; 11) mit einer Anzahl der genannten Löcher (15) versehen sind, die mindestens gleich der Anzahl der genannten Wölbungen (4) ist.

8. Das Verfahren zur Herstellung des Laminats (17) gemäß Anspruch 7, **dadurch gekennzeichnet, dass** die Wölbungen (4) und die darin gebildeten Löcher (15) sich am Umfang eines imaginären Kreises befinden und dabei vorzugsweise eine Rotationssymmetrie aufweisen.

9. Das Verfahren zur Herstellung des Laminats (17) gemäß einem vorhergehenden Anspruch, **dadurch gekennzeichnet, dass** vor dem Mehrlagen-Stanzprozess die einzelnen Schichten (50) des geschichteten Grundmaterials (51) auch außerhalb der Kontur (14) der noch auszuschneidenden Metallteile (10; 11) miteinander verbunden werden.

10. Das Verfahren zur Herstellung des Laminats (17) gemäß einem vorhergehenden Anspruch, **dadurch gekennzeichnet, dass** die Schichten (50) des geschichteten Grundmaterials (51) eine gegenseitig mindestens im Wesentlichen gleiche Dicke haben, eine gegenseitig mindestens im Wesentlichen gleiche Materialzusammensetzung haben oder beides.

11. Das Verfahren zur Herstellung des Laminats (17) gemäß einem vorhergehenden Anspruch, **dadurch gekennzeichnet, dass** das geschichtete Grundmaterial (51) mindestens 2 Schichten (50) und höchstens 12 Schichten (50) mit einer Schichtdicke von mindestens 0,1 mm und höchstens 0,3 mm umfasst und eine Gesamtdicke von höchstens 1,2 mm hat.

12. Das Verfahren zur Herstellung des Laminats (17) gemäß einem vorhergehenden Anspruch, **dadurch gekennzeichnet, dass** beim Zusammenbauen des Laminats (17) die Wölbung (4) des genannten zweiten Satzes (16; 16-2) der Metallteile (10; 11) in das Loch (15) des genannten ersten Satzes (16; 16-1) der Metallteile (10; 11) eingesetzt wird.

13. Das Verfahren zur Herstellung des Laminats (17) gemäß einem vorhergehenden Anspruch, **dadurch gekennzeichnet, dass** beim Zusammenbauen des Laminats (17) ein Startsatz (16-s) verwendet wird, der nicht mit den genannten Wölbungen (4) versehen ist.

14. Das Verfahren zur Herstellung des Laminats (17) gemäß einem vorhergehenden Anspruch, **dadurch gekennzeichnet, dass** eine Höhe der genannten Wölbungen (4) relativ zum angrenzenden geschichteten Grundmaterial (51) weniger als die Hälfte der Dicke des geschichteten Grundmaterials (51) beträgt und dass beim Zusammenbauen des Laminats (17) ein Startsatz (16-s) verwendet wird, der im Verhältnis zu den anderen Sätzen (16; 16-1, 16-2) des Laminats (17) auf den Kopf gestellt ist.

15. Das Verfahren zur Herstellung des Laminats (17) gemäß einem vorhergehenden Anspruch, **dadurch gekennzeichnet, dass** beim Zusammenbauen des Laminats (17) ein Startsatz (16-s) verwendet wird, der im Verhältnis zu den anderen Sätzen (16; 16-1, 16-2) des Laminats (17) auf den Kopf gestellt ist und dass die Metallteile (10; 11) eines angrenzenden Satzes (16-1*) im Laminat (17) mit einer Anzahl von Löchern (15) im Mehrlagen-Stanzprozess versehen sind, die gleich der Summe der Anzahl der Wölbungen (4) des Startsatzes (16-s) und des anderen angrenzenden Satzes (16-2*) davon ist.

## Revendications

1. Un procédé de fabrication d'un laminé (17) de pièces métalliques (10; 11) empilées mutuellement par un procédé de découpe multicouche, dans lequel, dans le procédé de découpe multicouche, plusieurs ensembles superposés (16; 16-1, 16-2, 16-s) de telles pièces métalliques (10; 11) sont successivement découpés à partir d'un matériau de base stratifié (51), à partir duquel le laminé (17) est ensuite assemblé à partir de plusieurs de ces ensembles (16; 16-1, 16-2, 16-s) de pièces métalliques (10; 11), en les empilant, et dans lequel, avant le procédé de découpe multicouche, les couches individuelles (50) du matériau de base stratifié (51) sont interconnectées par déformation plastique, ce qui forme une bosse (4) sur le matériau de base stratifié (51) à l'intérieur de la circonférence extérieure (14) des pièces métalliques (10; 11) encore à découper, **caractérisé en ce que** les pièces métalliques (10; 11) sont dotées d'un trou (15) qui est découpé dans le procédé de découpe multicouche et qui traverse complètement le matériau de base stratifié (51) et **en ce que**, lors de l'assemblage du laminé (17), la bosse (4) d'un premier ensemble (16; 16-1) des pièces métalliques (10; 11) est insérée dans le trou (15) d'un second ensemble (16; 16-2) des pièces métalliques (10; 11).

2. Le procédé de fabrication du laminé (17) selon la revendication 1, **caractérisé en ce qu'**avant le procédé de découpe multicouche, une cavité essentiellement rectangulaire (7) est pressée dans le matériau de base stratifié (51), tandis que la bosse (4) est formée avec une forme également essentiellement rectangulaire dont les côtés courts (6) sont pliés par rapport au matériau de base stratifié environnant (51) et dont les côtés longs (5) sont découpés du matériau de base stratifié environnant (51) et **en ce que** les côtés longs (5) découpés de la bosse (4) dépassent les côtés longs (5) découpés de la cavité (7).

3. Le procédé de fabrication du laminé (17) selon la revendication 1, **caractérisé en ce qu'**avant le procédé de découpe multicouche, une cavité essentiellement rectangulaire (7) est pressée dans le matériau de base stratifié (51) avec une dimension dans le plan du matériau de base stratifié (51) qui est inférieure à une dimension de la bosse (4) qui est formée sur le matériau de base stratifié (51) en face de la cavité (7) dans le même plan.

4. Le procédé de fabrication du laminé (17) selon la revendication 3, **caractérisé en ce qu'**une dimension de la bosse (4) perpendiculaire au matériau de base stratifié (51) est égale ou inférieure à la moitié d'une dimension, c'est-à-dire l'épaisseur, du matériau de base stratifié (51) dans la même direction et est de préférence égale ou supérieure à 0,2 **mm.**

5. Le procédé de fabrication du laminé (17) selon une revendication précédente, **caractérisé en ce qu'**un ajustement par force est réalisé dans le laminé (17) entre ladite bosse (4) et le dit trou (15).

6. Le procédé de fabrication du laminé (17) selon la revendication 5, **caractérisé en ce qu'**une dimension (W) de la bosse (4) à l'extérieur du trou (15) est plus grande, de préférence entre 0,1 et 1,0 % plus grande qu'une dimension correspondante (B) du trou (15) sans la bosse (4) insérée.

7. Le procédé de fabrication du laminé (17) selon une revendication précédente, **caractérisé en ce que** ladite bosse (4) est formée sur le matériau de base stratifié (51) à plusieurs positions à l'intérieur du contour des pièces métalliques (10; 11) et **en ce que** les pièces métalliques (10; 11) sont dotées d'un nombre de dits trous (15) qui est au moins égal au nombre des dites bosses (4).

8. Le procédé de fabrication du laminé (17) selon la revendication 7, **caractérisé en ce que** les bosses (4) et les trous (15) qui y sont formés sont situés sur la circonférence d'un cercle imaginaire et, par conséquent, présentent de préférence une symétrie de rotation.

9. Le procédé de fabrication du laminé (17) selon une revendication précédente, **caractérisé en ce qu'**avant le procédé de découpe multicouche, les couches individuelles (50) du matériau de base stratifié (51) sont également interconnectées en dehors du contour (14) des pièces métalliques (10; 11) encore à découper.

10. Le procédé de fabrication du laminé (17) selon une revendication précédente, **caractérisé en ce que** les couches (50) du matériau de base stratifié (51) ont une épaisseur mutuellement au moins substantiellement identique, ont une composition matérielle mutuellement au moins substantiellement identique ou les deux.

11. Le procédé de fabrication du laminé (17) selon une revendication précédente, **caractérisé en ce que** le matériau de base stratifié (51) comprend au moins 2 couches (50) et au maximum 12 couches (50) avec une épaisseur de couche d'au moins 0,1 mm et au maximum 0,3 mm et a une épaisseur totale d'au maximum 1,2 **mm.**

12. Le procédé de fabrication du laminé (17) selon une revendication précédente, **caractérisé en ce que**, lors de l'assemblage du laminé (17), la bosse (4) du dit second ensemble (16; 16-2) des pièces métalliques (10; 11) est insérée dans le trou (15) du dit premier ensemble (16; 16-1) des pièces métalliques (10; 11).

13. Le procédé de fabrication du laminé (17) selon une revendication précédente, **caractérisé en ce que**, lors de l'assemblage du laminé (17), un ensemble de départ (16-s) est appliqué qui n'est pas pourvu des dites bosses (4) .

14. Le procédé de fabrication du laminé (17) selon une revendication précédente, **caractérisé en ce qu'**une hauteur des dites bosses (4) par rapport au matériau de base stratifié adjacent (51) est inférieure à la moitié de l'épaisseur du matériau de base stratifié (51) et **en ce que**, lors de l'assemblage du laminé (17), un ensemble de départ (16-s) est appliqué qui est retourné par rapport aux autres ensembles (16; 16-1, 16-2) du laminé (17).

15. Le procédé de fabrication du laminé (17) selon une revendication précédente, **caractérisé en ce qu'**en assemblant le laminé (17), un ensemble de départ (16-s) est appliqué qui est retourné par rapport aux autres ensembles (16; 16-1, 16-2) du laminé (17) et **en ce que** les pièces métalliques (10; 11) d'un ensemble adjacent (16-1*) dans le laminé (17) sont pourvues d'un nombre de trous (15) dans le procédé de découpe multicouche qui est égal à la somme du nombre de bosses (4) de l'ensemble de départ (16-s) et de l'autre ensemble adjacent (16-2*) de celui-ci.
